# FASCICULE DE BREVET EUROPEEN

(11) **EP 3 234 703 B1**
(45) Date de publication et mention de la délivrance du brevet: **22.08.2018**
(21) Numéro de dépôt: 15808385.7
(22) Date de dépôt: 10.12.2015
(51) Int. Cl.: G04G 21/02, G01J 1/42, G01J 1/50

(54) **ELEMENT D'HABILLAGE AVEC CAPTEUR DE LUMINOSITE**
AUSSTATTUNGSELEMENT MIT LICHTSENSOR
EXTERNAL TIMEPIECE ELEMENT WITH ILLUMINATION SENSOR

(30) Priorité: 15.12.2014 EP 14198049
(43) Date de publication de la demande: 25.10.2017
(73) Titulaire: The Swatch Group Research and Development Ltd., 2074 Marin (CH)
(72) Inventeur: FRANÇOIS, Nicolas, 2000 Neuchâtel (CH)
(74) Mandataire: Giraud, Eric
(86) Numéro de dépôt international: PCT/EP2015/079290
(87) Numéro de publication internationale: WO 2016/096616

(56) Documents cités:
- EP-A1- 0 562 201
- WO-A1-99/14573
- CH-A3- 670 185
- FR-A1- 2 695 722
- JP-A- S5 386 274
- US-A- 5 581 090
- US-A1- 2011 222 375

## Description

La présente invention est relative à un élément d'habillage d'une pièce d'horlogerie comprenant une armature réalisée en un premier matériau, ledit élément d'habillage comprenant en outre au moins un capteur de luminosité.

### ARRIERE PLAN TECHNOLOGIQUE

Il est connu des objets portables tels que des montres équipées de capteurs permettant la détection des rayons ultraviolets ou UV. Ces appareils comprennent un capteur semi-conducteur ultraviolet consistant en un composant GaAsP associé à un filtre UV.

Un inconvénient de ces capteurs semi-conducteurs ultraviolets est qu'ils ont un temps de latence pour l'affichage et qu'ils sont coûteux. De plus ces capteurs étant électroniques, leur utilisation dans une montre mécanique est peu souhaitée.

Une autre possibilité connue consiste en un bracelet réalisé en plastique dont ledit plastique comprend un pigment photochromique c'est-à-dire changeant de couleur selon la lumière. Ces pigments photochromiques peuvent être choisis pour être sensibles à différentes longueurs d'ondes, dont les ultraviolets.

Un inconvénient de ce genre de bracelet est qu'il est d'une couleur unie et que la variation de couleur en fonction du niveau de lumière UV se fait autour de cette couleur unie. On comprend par là qu'un bracelet dont la couleur initiale est le vert va voir sa teinte varier d'un vert pâle à un vert foncé en fonction de l'intensité de la lumière ultraviolette.

Un inconvénient de ce type de produit est que l'indication n'est pas précise puisqu'il est difficile d'associer une teinte spécifique avec un niveau de luminosité ultraviolet.

Le document WO 99/14573 décrit un élément d'habillage d'une pièce d'horlogerie comprenant une armature réalisée en un premier matériau, ledit élément d'habillage comprenant en outre au moins un capteur de luminosité.

Le capteur de luminosité selon ce document est décrit en détails aux figures 5a à 5e et 6a à 6c. Il est formé d'un guide de lumière comprenant un tronçon d'entrée orientant une lumière vers un tronçon chromique, ce tronçon incorporant un pigment photochromique sensible à une longueur d'onde spécifique. Ce pigment réagit à une intensité spécifique du rayonnement de la longueur d'onde spécifique de sorte que ledit pigment passe d'une première couleur à une seconde couleur lorsque ladite intensité spécifique du rayonnement est atteinte.

### RESUME DE L'INVENTION

L'invention concerne un élément d'habillage tel que défini dans la revendication indépendante 1.

Des variantes préférées sont définies dans les revendications dépendantes.

### BREVE DESCRIPTION DES FIGURES

Les avantages d'un tel élément d'habillage apparaîtront clairement à la lecture de la description qui va suivre et à l'examen du dessin qui l'illustre à titre d'exemple et dans lequel :
- les figures 1 à 13 décrivent des exemples de réalisation de montres comportant des capteurs de luminosité. Ces réalisations ne font pas partie de l'invention, mais certains détails préférés peuvent être utilisés également dans le cadre de l'invention.
- la figure 14 représente de manière schématique un mode de réalisation de la présente invention.

### DESCRIPTION DETAILLEE

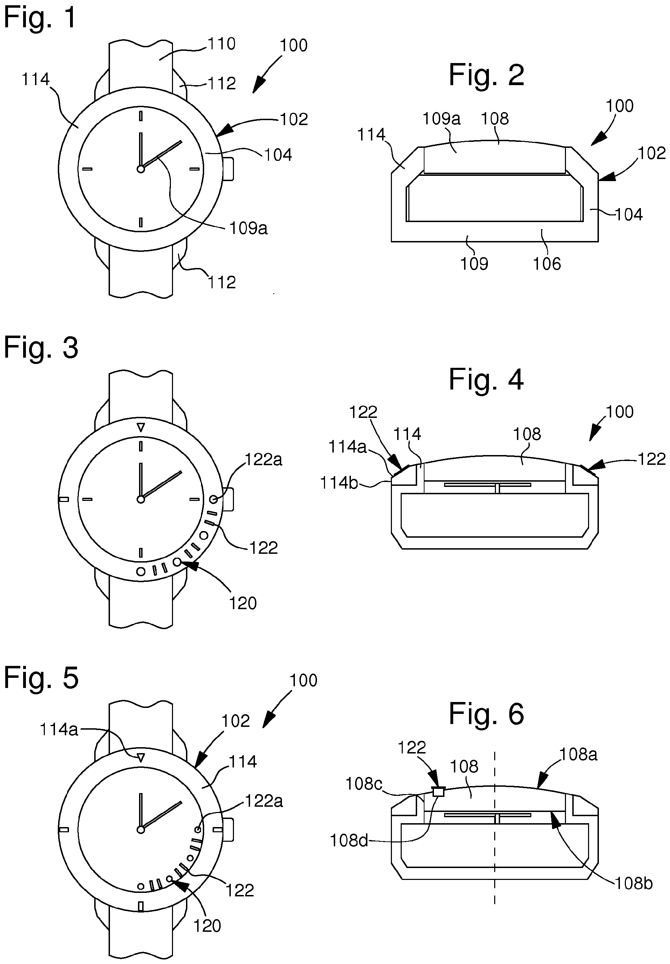

La présente invention concerne un élément d'habillage 1 d'une pièce d'horlogerie ou montre 100. Une pièce d'horlogerie 100, visible aux figures 1 et 2, est par exemple une montre bracelet et comprend un boitier 102. Ce boitier est formé par une carrure 104 fermée par un fond 106 et une glace 108. La pièce d'horlogerie comprend également un bracelet 110. Ce dernier est fixé à la carrure via deux paires de cornes 112. Le bracelet peut être constitué de deux brins de bracelet, chaque brin étant fixé à une paire de cornes et relié à l'autre brin via un fermoir.

L'élément d'habillage 1 comprend une armature réalisée en un premier matériau. Ce premier matériau peut être un matériau métallique ou plastique.

Sur cette armature, au moins un capteur de luminosité 120 est agencé. Ce capteur de luminosité est utilisé afin de permette à l'utilisateur de visualiser à quelle intensité de luminosité il se trouve par rapport à une référence. En effet, il est connu l'indice UV utilisé pour informer de l'intensité du rayonnement ultraviolet. Il existe donc un seuil minimal à partir duquel une information sur cette intensité du rayonnement ultraviolet est visible.

Avantageusement, le capteur de luminosité comprend au moins une pastille photochromique 122. Cette pastille photochromique est composée principalement d'un pigment photochromique tel que ceux définis dans le brevet US5208132 A, qui est dispersé dans une matrice organique ou inorganique. Cette matrice est un liant servant de support pour le pigment.

Un tel pigment photochromique présente une première couleur et change de couleur pour présenter une seconde couleur lorsque l'intensité du rayonnement atteint une valeur spécifique audit pigment. Ici, il s'agira de l'intensité du rayonnement ultraviolet de longueur d'ondes 100 à 400nm.

Cette caractéristique permet d'indiquer visuellement le franchissement d'un seuil d'intensité du rayonnement ultraviolet.

Dans une réalisation possible, le capteur de luminosité permet la visualisation d'une échelle de luminosité. Pour cela, le capteur de luminosité comprend une pluralité de pastilles 122 photochromiques. Chaque pastille photochromique comprend un pigment réagissant à une intensité spécifique. Par conséquent, chaque pastille 122 change de couleur lorsqu'une intensité du rayonnement spécifique est atteinte. Pour avoir une échelle de luminosité, il sera fait en sorte que les intensités spécifiques des pastilles 122 soient croissantes. Ainsi, lorsque l'utilisateur portant l'objet portable se met au soleil, les pastilles changent de couleur au fur et à mesure permettant une indication visuelle. Ces pastilles 122 peuvent être collées les unes aux autres ou espacées.

Dans une autre réalisation possible, les différentes pastilles composant l'échelle de luminosité présentent toute une première couleur, c'est à dire une couleur au repos identique. On comprend par là qu'à un niveau de luminosité en dessous du seuil minimal, toutes les pastilles ont la même couleur.

Dans une autre réalisation possible, les différentes pastilles composant l'échelle de luminosité présentent toute une seconde couleur, c'est à dire une couleur, lorsque leur seuil spécifique est atteint, identique. On comprend par là qu'à la luminosité maximale mesurable, toutes les pastilles auront la même couleur.

Dans une autre réalisation possible, les différentes pastilles composant l'échelle de luminosité présentent toute une première couleur identique mais sont réalisées pour qu'elles n'aient pas toutes une seconde couleur identique afin de permettre un dégradé. Plus précisément, les pastilles sont conçues pour que, lorsqu'elles forment une échelle de luminosité, les pastilles changeant de couleur les premières ont une seconde couleur plus claire que les pastilles changeant de couleur en dernier. Par exemple, les premières pastilles deviennent jaunes et les dernières deviennent rouges. Cela permet une indication double : non seulement l'utilisateur sait que la luminosité augmente car le nombre de pastilles changeant de couleur augmente mais il sait également qu'il se rapproche d'une intensité maximale car la couleur varie et devient de plus en plus foncée.

On comprendra donc ici que le pigment photochromique est du type réversible. Cela signifie que lorsque le pigment atteint ou dépasse un seuil de luminosité spécifique, il change de couleur passant d'une première couleur à une seconde couleur. Mais cela signifie aussi que lorsque la luminosité repasse en dessous du seuil spécifique, le pigment passe de la seconde couleur vers la première couleur.

La matrice utilisée pour la dispersion du pigment peut être de différentes sortes.

Une première catégorie de matrice comprend les encres, laques et peintures. Cette matrice consiste en un liant élastomérique mélangé avec au moins un solvant, un plastifiant et un dispersant. Une telle matrice peut être un polyuréthane réticulé.

Une seconde catégorie de matrice comprend les granulés thermoplastiques. Cette matrice consiste en une résine mélangée avec au moins un dispersant et un plastifiant.

Une troisième catégorie de matrice comprend le mélange caoutchouc. Cette matrice consiste en un élastomère mélangé avec au moins des charges, un dispersant et un système de vulcanisation. Cette catégorie permet alors de réaliser des inserts comprenant ledit pigment photochromique afin de former une mosaïque.

Une quatrième catégorie de matrice comprend les mélanges thermodurcissables. Ces mélanges consistent en une résine liquide mélangée avec au moins un dispersant.

Il est ainsi possible d'obtenir une pastille se présentant sous la forme d'un insert organique/inorganique transparent (Polymétacrylate de méthyle, résine acrylique, époxy, verre de formule chimique brute SiO2 ou Al2O3 ou C). Cet insert peut être sérigraphié sur une face avec une encre à base de pigment photochromique ou avoir le pigment photochromique dispersé dans le matériau formant l'insert.

Dans un premier exemple, l'élément d'habillage est une lunette 114 comme visible aux figures 3 et 4. Cette lunette 114 peut être une lunette tournante ou une lunette fixe. Dans le cas d'une lunette fixe, cette lunette peut être un anneau fixé à la carrure de sorte à ne pas pouvoir tourner ou être directement intégrée à la carrure 104 et former ainsi une carrure-lunette.

Une telle lunette 114 présente une paroi supérieure 114a qui est la face visible par l'utilisateur et une paroi verticale 114b permettant à l'utilisateur de faire tourner la lunette dans le cas d'une lunette tournante.

Dans cet exemple, les pastilles 122 comprenant les pigments photo-électriques sont agencées sur la paroi supérieure 114a faisant office de face visible.

Dans le cas où les pastilles 122 se présentent sous la forme d'une encre ou peintures, ces pastilles sont sérigraphiées sur ladite paroi supérieure. Une échelle peut également être sérigraphiée pour associer une indication chiffrée à ces pastilles photochromiques. Bien entendu, il peut être prévu que les valeurs importantes telles que 500Lux, 1000Lux, 20000Lux, 100000Lux soient visualisées par des pastilles différentes 122a.

Dans le cas où les pastilles se présentent sous la forme d'insert, la paroi supérieure 114a de la lunette 114 comprend des creusures (non représentées). Le nombre de creusures est identique au nombre d'inserts. Les inserts peuvent alors être placés et fixés dans les creusures par collage par exemple. Toutefois, il reste possible de directement surmouler les inserts dans les creusures. On obtient alors une lunette ayant un aspect bi-matière lorsqu'une lunette en métal présente des inserts en caoutchouc.

Ce capteur de luminosité 120 peut être agencé sur un quart de la lunette ou un tiers ou une demi-lunette.

Dans un second exemple visible aux figures 5 et 6, l'élément d'habillage est la glace 108 de l'objet portable. Une telle glace 108 est fixée à la carrure 104 et présente une face supérieure 108a, une face inférieure 108b et une tranche latérale 108c pour la fixation.

Dans ce second exemple, les pastilles 122 photochromiques sont agencées sur la face supérieure 108a de la glace. Il serait possible de les mettre sur la face inférieure, si le matériau transparent sélectionné laissait passer les UV.

Dans le cas où les pastilles se présentent sous la forme d'une encre ou peinture, ces pastilles sont sérigraphiées sur ladite face supérieure 108a. Une échelle peut également être sérigraphiée pour associer une indication chiffrée à ses pastilles photochromiques. Cette échelle peut aussi être sérigraphiée sur la lunette.

Dans une variante, la glace présente des creusures 108d de très faibles épaisseurs. Ces creusures permettent d'y placer l'encre photochromique tout en s'assurant d'une surface de glace 108 parfaitement lisse, les risques de chocs écaillant ladite encre sont donc diminués.

Dans le cas où les pastilles 122 se présentent sous la forme d'insert, la face supérieure 108a de la glace 108 comprend des creusures 108d. Le nombre de creusures est identique au nombre d'inserts. Les inserts peuvent alors être placés et fixés dans les creusures par collage par exemple. Toutefois, il reste possible de directement surmouler les inserts dans les creusures. On obtient alors une glace ayant un aspect bi-matière.

Il est possible, pour ces deux cas de figure, que les pastilles photochromiques 122 soient agencées sur la face supérieure de la glace mais que les indications chiffrées de luminosité soient placées sur le cadran ou sur la face inférieure de la glace.

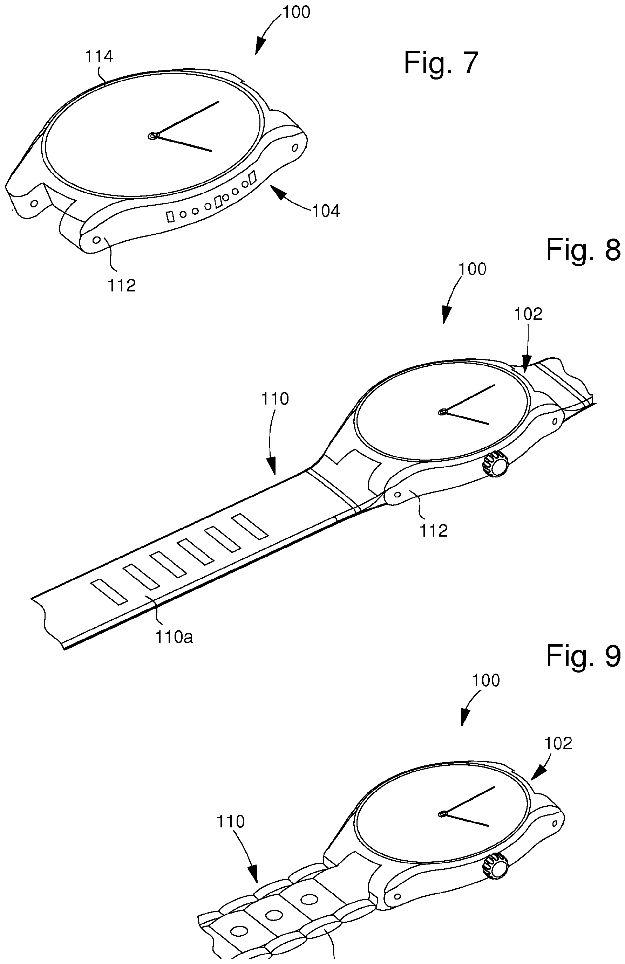

Dans un troisième exemple visible à la figure 7, l'élément d'habillage est la carrure 104 de l'objet portable.

Comme pour le premier et le second exemple, les pastilles photochromiques sous forme d'encre ou d'inserts sont agencées directement sur la carrure ou dans des creusures sur ladite carrure. Des indications chiffrées de luminosité peuvent être sérigraphiées ou gravées sur la carrure.

Dans un quatrième exemple, l'élément d'habillage est le bracelet 110 de la montre. En effet, la pièce d'horlogerie est munie d'un bracelet fixé à la carrure via deux paires de cornes.

Dans un premier cas visible à la figure 8, le bracelet 110 est constitué de deux brins 110a de bracelet, chaque brin étant fixé à une paire de cornes 112 et relié à l'autre brin via un fermoir 111. Préférentiellement, les brins 110a de bracelet sont réalisés en caoutchouc ou plastique.

Plusieurs solutions sont possibles pour l'agencement des pastilles photochromiques 122.

Une première solution consiste à utiliser des pastilles sous forme d'encre et à déposer cette encre sur la surface d'un brin de bracelet.

Une seconde solution consiste à utiliser des pastilles sous forme d'insert et à placer et fixer ces inserts dans des creusures faites dans le brin de bracelet.

Une troisième solution consiste à utiliser des pastilles sous forme d'encre et à déposer cette encre sur un support flexible. Ce support flexible étant ensuite inséré dans le brin de bracelet de sorte que les pastilles soient visibles.

Dans un second cas visible à la figure 9, le bracelet est en métal et est alors constitué d'une pluralité de maillons 110b attachés les uns aux autres par l'intermédiaire de goupilles. Cela permet d'avoir des maillons 110b qui supportent les pastilles photochromiques et qui peuvent pivoter les uns par rapport aux autres.

Ce brin de bracelet est également constitué d'un fermoir. Ce fermoir se présente ici sous la forme d'une boucle déployante 111. Une telle boucle déployante est composée généralement de trois parties 111a, 111b, 111c comme des longerons et articulées les unes par rapport aux autres. Deux de ces parties sont fixées à un maillon.

Ces parties composant la boucle déployante sont alors conçues pour s'articuler de sorte qu'elles puissent s'empiler, ces trois parties 111a, 111b, 111c n'en faisant alors qu'une. Cette configuration permet d'agrandir la longueur du bracelet momentanément pour la fixation au poignet de l'utilisateur.

Les pastilles photochromiques sous forme d'encre ou d'inserts sont alors agencées au niveau des maillons 110b dudit bracelet, directement sur le bracelet ou dans des creusures de celui-ci.

Préférentiellement, chaque maillon 110b porte une pastille photochromique.

Encore plus préférentiellement, les pastilles photochromiques sont agencées sur les maillons placés entre la paire de cornes située à 6H et la boucle déployante. Effectivement, lorsqu'une pièce d'horlogerie se trouve au poignet de l'utilisateur, les maillons situés entre la paire de cornes située à 6H et la boucle déployante sont les plus accessibles par l'utilisateur. Ce dernier a juste à légèrement tourner son poignet pour les voir. Ils sont encore plus visibles lorsque l'utilisateur à ses bras posés sur une table ou un bureau. Cet agencement permet de ne pas surcharger le visuel du cadran en ayant des pastilles sur la glace ou la lunette tout en offrant une bonne visibilité.

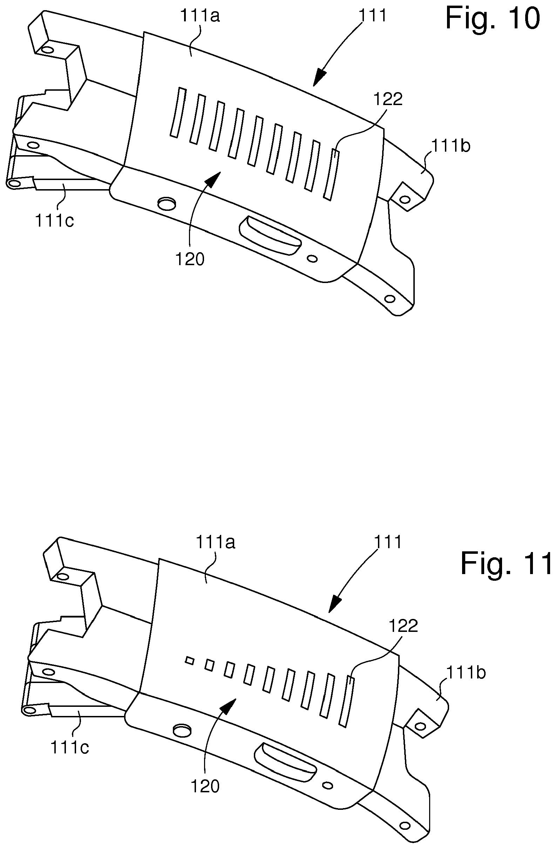

Dans un cinquième exemple visible aux figures 10 à 12, l'élément d'habillage est le fermoir 111 c'est-à-dire la boucle déployante du bracelet. En effet, une telle boucle déployante est composée généralement de trois parties comme des longerons, articulées les unes par rapport aux autres. Deux de ces parties sont fixées à un maillon. Ces parties composant la boucle déployante sont alors conçues pour s'articuler de sorte qu'elles puissent s'empiler, ces trois parties n'en faisant alors qu'une. Pour certains modèles de boucle déployante, une des parties fait office de pièce principale 111a car c'est cette partie qui accueille les deux autres parties 111b, 111c, cette partie dite principale est la partie visible de l'extérieur. De l'extérieur, l'utilisateur voit donc une partie ayant la forme d'une plaque de métal sur laquelle des indications comme le nom de la marque, peuvent être par exemple gravées.

Avantageusement, on utilise cette surface pour l'agencement du capteur de luminosité. Les pastilles photochromiques sont donc disposées sur cette surface de la partie centrale 111a de la boucle déployante comme visible à la figure 10.

Les pastilles photochromiques peuvent être alignées et associées à une échelle d'indications chiffrées. Il est toutefois possible que les pastilles soient configurées pour avoir des tailles différentes selon la luminosité comme visible à la figure 11. Par exemple, les pastilles peuvent se présenter sous la forme de barrettes de plus en plus grandes à mesure que l'intensité du rayonnement augmente. De ce fait, l'utilisateur est capable, sans indication chiffrée, d'avoir une information fiable.

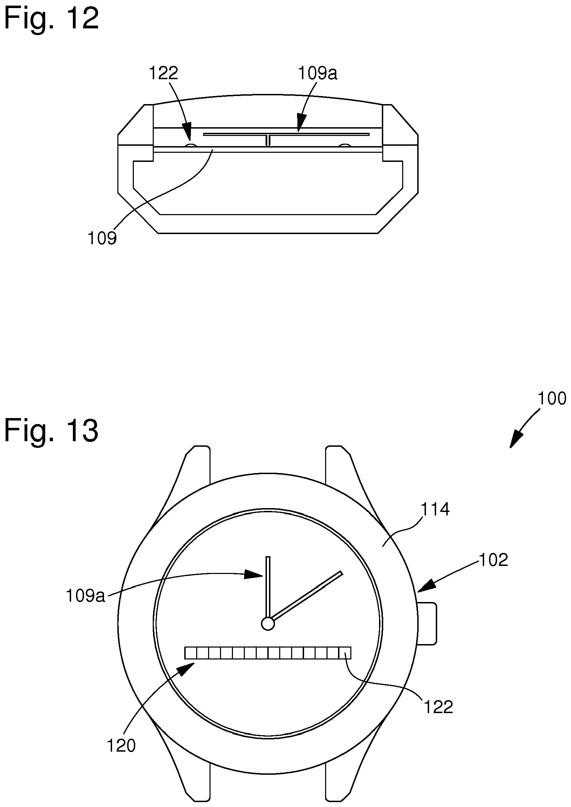

Dans un sixième exemple visible aux figures 12 et 13, l'élément d'habillage est le cadran de la pièce d'horlogerie. En effet, étant donné que la glace de la pièce d'horlogerie est en principe suffisamment transparente, il est envisageable de déposer la ou les pastilles photochromiques directement sur le cadran. Cette configuration permet avantageusement d'éviter tout risque de dommages liés à des rayures ou chocs. Cette réalisation est possible si la glace 108 n'est pas munie d'un revêtement filtrant de sorte que la totalité des rayons de la longueur d'onde spécifique puisse être captée par lesdites pastilles photochromiques 122.

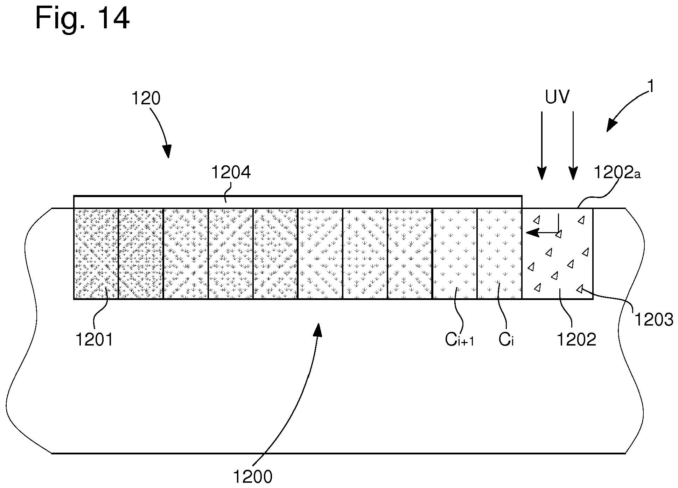

Dans un mode de réalisation de l'invention, visible à la figure 14, le capteur de luminosité 120 consiste en un guide de lumière 1200. Ce guide de lumière 1200 est composé d'une multitude de pastilles qui se présentent ici sous la forme de tronçons 1201 accolés ou collés les uns aux autres. Les différents tronçons 1201 pouvant être de longueurs identiques ou différents selon les besoins. Astucieusement, chaque tronçon 1201 est réalisé dans un matériau adapté pour un guide de lumière telle que du saphir ou du plastique comme le Polymétacrylate de méthyle et est fabriqué de sorte à intégrer des pigments photochromiques dans la matière. Le capteur de luminosité 120 est alors conçu pour que chaque tronçon 1201 présente une concentration Ci en pigments photochromiques différentes de sorte à avoir une concentration Cᵢ croissante. Cette configuration permet le fonctionnement suivant du capteur de luminosité.

Le fonctionnement consiste à voir un faisceau de lumière qui entre dans le guide de lumière. Pour cela, un tronçon d'entrée 1202 peut être utilisé. Ce tronçon d'entrée 1202 comprenant des microstructures 1203 agencés dans ledit tronçon pour guider la lumière venant de l'extérieur vers les autres tronçons. Les autres tronçons 1201 sont agencés de la concentration la plus faible à la plus forte de sorte que le tronçon avec la concentration Cᵢ la plus faible soit situé juste après le tronçon d'entrée 1202. De cette façon, suivant l'intensité lumineuse, le flux de lumière traversera les différents tronçons 1201 jusqu'à atteindre le tronçon 1201 ayant le pigment réagissant avec son intensité spécifique. On comprend que plus le flux lumineux progresse de tronçon en tronçon 1201, plus la lumière est diffusée et plus le flux perd en intensité. Donc, plus le flux lumineux qui entre dans le tronçon d'entrée 1202 est intense, plus forte est l'intensité dans les tronçons 1201, plus nombreux sont les pigments qui réagissent et plus nombreux sont les tronçons 1201 qui se colorent. L'approche choisie permet de plus d'avoir un gradient de couleur dans les tronçons proportionnel au gradient d'intensité lumineuse.

Dans un exemple, l'élément d'habillage est une lunette. Cette lunette comprend une creusure dans laquelle le capteur de luminosité 120 est agencé. Ce capteur de luminosité comprend ici onze tronçons 1201 répartis entre un tronçon d'entrée et dix tronçons 1201 intégrant le pigment photochromique. Le tronçon d'entrée 1202 récupère la lumière via la face supérieure 1202a qui est la face visible et comprend des microstructures 1203 permettant d'orienter le faisceau de lumière à 90° en direction des autres tronçons. Étant donné la configuration des tronçons, les tronçons incorporant les pigments photochromiques seront recouverts d'une couche de protection anti-ultraviolet (anti-uv) 1204 d'épaisseur comprise entre 15mu et 150mu empêchant ces derniers de pénétrer dans les tronçons 1201 via la face supérieure de ceux-ci.

Dans un exemple de réalisation, la concentration minimale sera de 0.05% Alors que la concentration maximale sera de 1.5%. Le pas entre chaque tronçon 1201 pourra sera compris dans un intervalle de 1mm à 5mm et préférentiellement de 1mm pour augmenter la résolution.

Bien entendu, certaines variantes discutées avec référence aux figures 1 à 13 s'appliquent aussi au mode de réalisation de l'invention, tel que décrit à la figure 14, comme par exemple la gestion des coloris, tous les tronçons pouvant avoir la même première couleur ou la même seconde couleur ou une seconde couleur différente ou présenté un dégradé.

On comprendra que diverses modifications et/ou améliorations et/ou combinaisons évidentes pour l'homme du métier peuvent être apportées au mode de réalisation de l'invention exposé à la figure 14 ci-dessus sans sortir du cadre de l'invention définie par les revendications annexées.

Ainsi, il est envisageable que le pigment photochromique soit sensible à un rayonnement d'une autre longueur d'onde comme les infrarouges ou le spectre visible. Il est aussi possible d'avoir un capteur de luminosité qui peut détecter préférentiellement les UV-A dont la longueur d'onde varie de 400 à 315 nm ou les UV-B dont la longueur d'onde varie de 315 à 280 nm, ou encore les UV-C dont la longueur d'onde varie de 280 à 100 nm.

Il est également possible d'avoir plusieurs capteurs de luminosités avec chaque capteur sensible à une longueur d'onde spécifique. On est alors capable d'obtenir un objet portable qui pourrait être capable de détecter les UV-A dont la longueur d'onde varie de 400 à 315 nm ou les UV-B dont la longueur d'onde varie de 315 à 280 nm, ou encore les UV-C dont la longueur d'onde varie de 280 à 100 nm.

Dans une autre variante, la pastille combine la fonction photochromique à une autre fonction. Par exemple il peut être prévu d'utiliser des pigments phosphorescents pour des applications dans les montres de plongée de sorte à avoir une visibilité du capteur de luminosité. Dans ce cas, la couche phosphorescente sera agencée sous la couche photochromique, il pourra alors être prévu que la couche photochromique soit sensible à un premier intervalle de longueur d'ondes et que la couche phosphorescente soit sensible à un second intervalle de longueur d'ondes. Par exemple, le pigment photochromique pourra réagir à des longueurs d'ondes de 280 à 400nm et le pigment phosphorescent situé sous le pigment photochromique réagira à des longueurs d'ondes de 100 à 250nm. De ce fait, la journée, le pigment photochromique passe de l'état transparent à l'état coloré pour une indication de niveau d'UV alors que la nuit, le pigment photochromique se trouve à l'état transparent permettant au pigment phosphorescent d'afficher un tour d'heure et donc d'indiquer une information horaire. Dans un autre exemple, il peut être prévu d'utiliser des pigments thermo-chromiques permettant également de réagir à un seuil de température critique provoqué par l'intensité lumineuse sur le capteur.

## Revendications

1. Elément d'habillage (1) d'une pièce d'horlogerie comprenant une armature réalisée en un premier matériau, ledit élément d'habillage comprenant en outre au moins un capteur de luminosité (120), ledit capteur de luminosité étant formé d'un guide de lumière (1200) comprenant un tronçon d'entrée (1202) orientant une lumière, selon une direction dite direction d'incidence de la lumière, vers une multitude de tronçon (1201) chromique, les tronçons chromiques incorporant un pigment photochromique sensible à une longueur d'onde spécifique, chaque tronçon étant agencé pour que ledit pigment photochromique réagisse à une intensité spécifique du rayonnement de la longueur d'onde spécifique de sorte que ledit pigment passe d'une première couleur à une seconde couleur lorsque ladite intensité spécifique du rayonnement est atteinte et en ce que la concentration (Cᵢ) en pigment est différente entre chaque tronçon, les tronçons étant disposés selon une direction sensiblement perpendiculaire par rapport à la direction d'incidence de la lumière, la multitude de tronçons photochromiques étant disposé de côtés par rapport au tronçon d'entrée, la concentration du pigment dans chaque tronçon étant croissante en partant du côté du tronçon d'entrée, et la multitude de tronçons étant recouvert d'une couche de protection anti-ultraviolet, de sorte que la lumière puisse entrer seulement par le tronçon d'entrée.

2. Elément d'habillage selon la revendication 1, **caractérisé en ce que** les tronçons (1201) sont agencés de façon que le flux de lumière, orienté par le tronçon d'entrée (1202), progresse de tronçon en tronçon en ayant une intensité décroissante.

3. Elément d'habillage selon la revendication 2, **caractérisé en ce que** les tronçons sont agencés afin que le tronçon (1201) réagissant à la plus faible intensité lumineuse possède la plus faible concentration en pigment, la concentration (Ci) étant croissante en fonction de l'intensité lumineuse.

4. Elément d'habillage selon les revendications 1 ou 2, **caractérisé en ce que** lesdits tronçons ont tous la même première couleur à l'état de repos.

5. Elément d'habillage selon la revendication 4, **caractérisé en ce que** lesdits tronçons ont tous la même seconde couleur à partir d'un seuil de rayonnement ultraviolet spécifique.

6. Elément d'habillage selon la revendication 4, **caractérisé en ce que** lesdits tronçons sont conçus de sorte que leur seconde couleur permettent un dégradé lorsqu'ils sont tous passés de la première couleur à la seconde couleur.

7. Elément d'habillage selon l'une des revendications précédentes, **caractérisé en ce que** le tronçon d'entrée (1202) comprend des microstructures (1203) permettant d'orienter la lumière vers les tronçons chromiques.

8. Elément d'habillage selon l'une des revendications précédentes, **caractérisé en ce que** l'armature comprend au moins une creusure dans laquelle le capteur de luminosité est agencé.

9. Elément d'habillage selon l'une des revendications précédentes, **caractérisé en ce que** l'armature est une lunette (114).

10. Elément d'habillage selon l'une des revendications 1 à 8, **caractérisé en ce que** l'armature est une glace (108).

11. Elément d'habillage selon l'une des revendications 1 à 8, **caractérisé en ce que** l'armature est une carrure (104) de boite (102) de montre.

12. Elément d'habillage selon l'une des revendications 1 à 8, **caractérisé en ce que** l'armature est un bracelet (110).

13. Elément d'habillage selon la revendication 12, **caractérisé en ce que** le bracelet comprend deux brins (110a) de bracelet en matériaux plastiques, ledit capteur de luminosité étant agencé sur au moins un des deux brins.

14. Elément d'habillage selon la revendication 12, **caractérisé en ce que** le bracelet comprend une pluralité de maillons (110b) articulés entre eux, ledit capteur de luminosité étant agencé sur au moins un maillon.

15. Elément d'habillage selon la revendication 12, **caractérisé en ce que** ledit bracelet est fermé par un fermoir (111) à boucle déployante, ledit capteur de luminosité étant agencé sur ledit fermoir.

16. Elément d'habillage selon l'une des revendications 1 à 8, **caractérisé en ce que** l'armature est une couronne.

17. Elément d'habillage selon l'une des revendications précédentes, **caractérisé en ce que** ledit pigment photochromique est choisi pour réagir au rayonnement ultraviolet.

## Patentansprüche

1. Ausstattungselement (1) eines Zeitmessgeräts, umfassend ein aus einem ersten Material hergestelltes Ausrüstungsteil, wobei das Ausstattungselement ferner mindestens einen Lichtsensor (120) aufweist, wobei der Lichtsensor aus einem Lichtleiter (1200) gebildet ist, der einen Eingangsabschnitt (1202) aufweist, der Licht in einer Richtung, die Einfallsrichtung des Lichts genannt wird, zu mehreren Farbabschnitten (1201) ausrichtet, wobei die Farbabschnitte ein für eine bestimmte Wellenlänge empfindliches photochromes Pigment enthalten, wobei jeder Abschnitt dafür ausgelegt ist, dass das photochrome Pigment auf eine bestimmte Intensität der Strahlung der bestimmten Wellenlänge reagiert, derart, dass das Pigment von einer ersten Farbe zu einer zweiten Farbe übergeht, wenn die bestimmte Intensität der Strahlung erreicht ist, und dass die Pigmentkonzentration (Cᵢ) für jeden Abschnitt unterschiedlich ist, wobei die Abschnitte in einer Richtung angeordnet sind, die zu der Lichteinfallsrichtung im Wesentlichen senkrecht ist, wobei die mehreren photochromen Abschnitte in Bezug auf den Eingangsabschnitt Seite an Seite angeordnet sind, wobei die Pigmentkonzentration in jedem Abschnitt ausgehend von der Seite des Eingangsabschnitts zunimmt und wobei die mehreren Abschnitte mit einer ultravioletthemmenden Schutzschicht beschichtet sind, derart, dass das Licht nur durch den Eingangsabschnitt eintreten kann.

2. Ausstattungselement nach Anspruch 1, **dadurch gekennzeichnet, dass** die Abschnitte (1201) in einer Weise angeordnet sind, dass sich der Lichtstrom, der durch den Eingangsabschnitt (1202) ausgerichtet wird, von Abschnitt zu Abschnitt mit abnehmender Intensität ausbreitet.

3. Ausstattungselement nach Anspruch 2, **dadurch gekennzeichnet, dass** die Abschnitte dafür ausgelegt sind, dass der Abschnitt (1201), der auf die geringste Lichtintensität reagiert, die geringste Pigmentkonzentration besitzt, wobei die Konzentration (Cᵢ) in Abhängigkeit von der Lichtintensität zunimmt.

4. Ausstattungselement nach den Ansprüchen 1 oder 2, **dadurch gekennzeichnet, dass** alle Abschnitte im Ruhezustand die gleiche erste Farbe haben.

5. Ausstattungselement nach Anspruch 4, **dadurch gekennzeichnet, dass** alle Abschnitte ab einem bestimmten Ultraviolettstrahlungs-Schwellenwert die gleiche zweite Farbe haben.

6. Ausstattungselement nach Anspruch 4, **dadurch gekennzeichnet, dass** die Abschnitte in einer Weise ausgelegt sind, dass ihre zweite Farbe eine Abtönung zulässt, wenn sie alle von der ersten Farbe zu der zweiten Farbe übergegangen sind.

7. Ausstattungselement nach einem der vorhergehenden Ansprüche, **dadurch gekennzeichnet, dass** der Eingangsabschnitt (1202) Mikrostrukturen (1203) aufweist, die ermöglichen, das Licht auf die Farbabschnitte auszurichten.

8. Ausstattungselement nach einem der vorhergehenden Ansprüche, **dadurch gekennzeichnet, dass** das Ausrüstungsteil mindestens eine Vertiefung besitzt, in der der Lichtsensor angeordnet ist.

9. Ausstattungselement nach einem der vorhergehenden Ansprüche, **dadurch gekennzeichnet, dass** das Ausrüstungsteil eine Lünette (114) ist.

10. Ausstattungselement nach einem der Ansprüche 1 bis 8, **dadurch gekennzeichnet, dass** das Ausrüstungsteil ein Glas (108) ist.

11. Ausstattungselement nach einem der Ansprüche 1 bis 8, **dadurch gekennzeichnet, dass** das Ausrüstungsteil ein Mittelteil (104) eines Uhrengehäuses (102) ist.

12. Ausstattungselement nach einem der Ansprüche 1 bis 8, **dadurch gekennzeichnet, dass** das Ausrüstungsteil ein Armband (110) ist.

13. Ausstattungselement nach Anspruch 12, **dadurch gekennzeichnet, dass** das Armband zwei Armbandschenkel (110a) aus Kunststoffmaterialien umfasst, wobei der Lichtsensor an mindestens einem der beiden Schenkel angeordnet ist.

14. Ausstattungselement nach Anspruch 12, **dadurch gekennzeichnet, dass** das Armband eine Mehrzahl von Gliedern (110b), die aneinander angelenkt sind, umfasst, wobei der Lichtsensor an mindestens einem Glied angeordnet ist.

15. Ausstattungselement nach Anspruch 12, **dadurch gekennzeichnet, dass** das Armband durch eine Schließe (111) mit aufklappbarer Schnalle geschlossen wird, wobei der Lichtsensor an der Schließe angeordnet ist.

16. Ausstattungselement nach einem der Ansprüche 1 bis 8, **dadurch gekennzeichnet, dass** das Ausrüstungsteil eine Krone ist.

17. Ausstattungselement nach einem der vorhergehenden Ansprüche, **dadurch gekennzeichnet, dass** das photochrome Pigment so gewählt ist, dass es auf Ultraviolettstrahlung reagiert.

## Claims

1. External element (1) of a timepiece comprising a frame made of a first material, said external element further comprising at least one light sensor (120), **characterized in that** said light sensor is formed of a light guide (1200) comprising an input section (1202) orientating a light, from the direction of light incidence, towards a multitude of chromic sections (1201), the chromic sections incorporating a photochromic pigment sensitive to a specific wavelength, each section being arranged such that said photochromic pigment reacts to a specific radiation intensity of the specific wavelength so that said pigment changes from a first colour to a second colour when said specific radiation intensity is reached and **in that** the pigment concentration (C) is different between each section, chromic sections being arranged along a perpendicular direction to the direction of light incidence, the multitude of chromic sections being arranged aside with respect to the input section, the pigment concentration in each section increasing from the input section side, and the chromic sections (1201) are coated with an anti-ultraviolet protective layer (1204) so that the light entering said sections only enters through the input section.

2. External element according to claim 1, **characterized in that** the sections (1201) are arranged so that the light, orientated by the input section (1202), progresses from sections (1201) to sections (1201) having a decreasing intensity.

3. External element according to claim 2, **characterized in that** the sections are arranged so that the section (1201) reacting to the lowest light intensity has the lowest concentration of pigment and the concentration (Ci) increases as a function of light intensity.

4. External element according to claims 1 or 2, **characterized in that** said sections all have the same first colour at the rest state.

5. External element according to claim 4, **characterized in that** said sections all have the same second colour from a specific ultraviolet radiation threshold.

6. External element according to claim 4, **characterized in that** said sections are devised such that the second colour can produce shading when the sections have all changed from the first colour to the second colour.

7. External element according to any of the preceding claims, **characterized in that** the input section (1202) includes microstructures (1203) allowing the light to be oriented towards the chromic sections.

8. External element according to any of the preceding claims, **characterized in that** the frame includes at least one hollow in which the light sensor is arranged.

9. External element according to any of the preceding claims, **characterized in that** the frame is a bezel (114).

10. External element according to any of claims 1 to 9, **characterized in that** the frame is a crystal (108).

11. External element according to any of claims 1 to 9, **characterized in that** the frame is a middle part (104) of a watch case (102).

12. External element according to any of claims 1 to 9, **characterized in that** the frame is a bracelet or watchband (110).

13. External element according to claim 12, **characterized in that** the bracelet includes two bracelet strands (110a) made of plastic materials, said light sensor being arranged on at least one of the two strands.

14. External element according to claim 12, **characterized in that** the bracelet includes a plurality of links (110a) hinged to each other, said light sensor being arranged on at least one link.

15. External element according to claim 12, **characterized in that** said bracelet is closed by a deployant buckle clasp (111), said light sensor being arranged on said clasp.

16. External element according to any of claims 1 to 9, **characterized in that** the frame is a crown.

17. External element according to any of the preceding claims, **characterized in that** said photochromic pigment is selected to react to ultraviolet radiation.
